# EUROPÄISCHE PATENTSCHRIFT

(11) **EP 0 664 244 B1**
(45) Veröffentlichungstag und Bekanntmachung des Hinweises auf die Patenterteilung: **27.12.1996**
(21) Anmeldenummer: 95100597.4
(22) Anmeldetag: 18.01.1995
(51) Int. Cl.: B60R 19/26

(54) **Dämpfungselement**
Damping element
Element d'amortissement

(30) Priorität: 22.01.1994 DE 4401874
(43) Veröffentlichungstag der Anmeldung: 26.07.1995
(73) Patentinhaber: PEGUFORM-WERKE GMBH, 79268 Bötzingen (DE)
(72) Erfinder: Amrhein, Joachim, D-79268 Bötzingen (DE)
(74) Vertreter: Rackette, Karl, Dipl.-Phys. Dr.-Ing

(56) Entgegenhaltungen:
- EP-A- 0 054 493
- WO-A-91/12156
- DE-A- 1 634 157
- DE-A- 2 149 035
- DE-A- 2 310 574
- FR-A- 2 607 082
- US-A- 1 855 977
- US-A- 2 094 739
- US-A- 4 573 724

## Beschreibung

Die Erfindung betrifft ein Dämpfungselement insbesondere zur Verwendung als Einlegeteil zwischen einer Stoßfängeraußenhaut eines Stoßfängers und einem an einem Fahrzeug befindlichen Träger mit mindestens einer stoßaufnehmenden Rippe, die zwei Federschenkel aufweist, wobei jeder Federschenkel einen Stoßübertragungsabschnitt, einen Befestigungsabschnitt und einen gekrümmten, den Stoßübertragungsabschnitt und den Befestigungsabschnitt verbindenden Stoßaufnahmeabschnitt aufweist, wobei die beiden Federschenkel im Bereich ihrer Stoßübertragungsabschnitte miteinander verbunden sind und der Abstand der beiden nicht deformierten, sich gegenüberliegenden Federschenkel im stoßübertragungsabschnittnahen Bereich der Stoßaufnahmeabschnitte kleiner als im befestigungsabschnittnahen Bereich der Stoßaufnahmeabschnitte ist.

Ein derartiges Dämpfungselement ist aus der DE 23 10 574 A1 bekannt. Bei dem gattungsgemäßen Dämpfungselement weist die stoßaufnehmende Rippe zwei Federschenkel auf, die in Form der Schenkel eines U angeordnet sind. Die freien Enden der Schenkel des Federelementes sind mit dem Befestigungsabschnitt im wesentlichen rechtwinklig auf dem Befestigungsgrund, beispielsweise einer Stoßstange eines Kraftfahrzeuges, angebracht. Die Federschenkel sind im unbelasteten Zustand leicht nach außen gewölbt vorgesehen. Bei Ausüben einer Druckbelastung auf die als flachen Steg ausgebildete Basis der in der Anordnung der U-förmigen Federschenkel werden zwischen dem Steg und den Befestigungsabschnitten ausgebildete Stoßaufnahmeabschnitte nach außen geknickt, so daß dadurch die Aufprallenergie von dem Dämpfungselement aufgenommen wird.

Aus der DE 16 34 157 A1 sind Dämpfungselemente bekannt, deren U-förmige Federschenkel gerade ausgebildete Stoßaufnahmeabschnitte mit gleichbleibender Materialstärke aufweisen. Die Federelemente sind aus einem elastischen Material, beispielsweise Gummi oder synthetischem Kunststoff, hergestellt. Die Befestigungsabschnitte sind an einem Befestigungsgrund anliegend festgeschraubt. Durch Anordnen der Stoßaufnahmeabschnitte der Federelemente unter einem Winkel von etwa 45 Grad bis etwa 80 Grad in Bezug auf die Befestigungsabschnitte sind hohe Aufprallenergien absorbierbar.

Aus der US 3,348,182 sind Dämpfungselemente bekannt, die eine von einem Befestigungsgrund vorstehende Außenhaut aufweisen, die innen durch plattenartige Rippen ausgesteift ist. Die Hohlräume zwischen den Rippen sind mit Schaumeinleger aus einem überwiegend plastisch verformbaren Polyurethanschaum ausgefüllt.

Ein weiteres Dämpfungselement ist aus dem Prospekt "Der neue Passat" der Volkswagen AG, Wolfsburg, Ausgabe März 1988 auf Seite 21 beschrieben. Das Dämpfungselement besteht im wesentlichen aus einem U-förmigen, der gebogenen Trägerform angepaßten Grundkörper, auf dessen zur Stoßfängeraußenhaut weisenden Seite eine Vielzahl längs- und quergerichteter, ein wabenförmiges Muster bildender Rippen angeordnet ist. Das zwischen der Stoßfängeraußenhaut und dem Träger angeordnete Dämpfungselement erstreckt sich entlang der gesamten Frontpartie des Stoßfängerträgers.

Mit Hilfe der vorbekannten Dämpfungselemente sind kleinere Stöße, beispielsweise Rangierstöße, bei Geschwindigkeiten von bis zu 4 km/h ohne bleibende Verformung des Dämpfungselements auffangbar. Die Aufprallkraft wirkt auf die erhabenen, rechtwinklig bezüglich des Dämpfungselementkörpers angeordneten Rippen, so daß diese durch Einbeulen oder durch Ein- beziehungsweise Wegknicken die Aufprallenergie aufnehmen. Die Materialauswahl und die Materialelastizität der Dämpfungselemente sind so ausgelegt, daß bei einem Aufprall mit den oben genannten geringen Geschwindigkeiten keine Brüche entlang der sich ausbildenden Knicklinien auftreten, die die Elastizität der Dämpfungselemente im Deformationsbereich reduzieren würden.

Bei wiederholten Aufprallen auf einen Bereich der Dämpfungselemente tritt in den wiederholt beanspruchten Knickstellen eine Materialermüdung ein, so daß sich Brüche ausbilden können. Die ursprüngliche Stoßauffangwirkung der Dämpfungselemente ist dann nicht mehr in vollem Umfange gewährleistet.

Darüber hinaus werden die beiden letztgenannten Dämpfungselemente bei Zusammenstößen mit höheren Geschwindigkeiten, etwa von 8 km/h, bleibend verformt, da sich dann bereits bei einem einzigen Aufprall Weißbrüche oder sogar Risse ausbilden.

Der Erfindung liegt daher die Aufgabe zugrunde, ein Dämpfungselement der eingangs genannten Art zum Auffangen kleinerer Stöße zu schaffen, daß nicht nur ohne Einbuße seiner elastischen Eigenschaften zum Auffangen von einer Vielzahl von Aufprallen geeignet ist, sondern das auch bei Aufprallgeschwindigkeiten über 4 km/h eine elastische Verformbarkeit aufweist.

Diese Aufgabe wird erfindungsgemäß dadurch gelöst, daß die Federschenkel im Bereich der Befestigungsabschnitte flächig an einem Befestigungsgrund anliegen und die gekrümmten Stoßaufnahmeabschnitte von dem Befestigungsgrund wegweisen, so daß sich bei einer auf die Federschenkel wirkenden Druckbelastung zunehmend Bereiche der gekrümmten Stoßaufnahmeabschnitte unter Verringerung der Krümmungsradien abrollähnlich an den Befestigungsgrund anlegen.

Da eine Rippe aus zwei miteinander verbundenen gekrümmten Federschenkeln gebildet ist, die im Bereich des Befestigungsabschnittes flächig an dem Befestigungsgrund, etwa einem Träger oder einer Stoßfängeraußenhaut, anliegen und von dem Befestigungsgrund wegweisend einwärts gekrümmt abstehen, legen sich bei einer auf die Federschenkel wirkenden Druckbelastung zunehmend weitere Bereiche des gekrümmten Stoßaufnahmeabschnittes abrollähnlich an der Befestigungsoberfläche an. Die Aufprallenergie wird somit in eine gleichmäßige Abrollung der Federschenkel eingeleitet, wobei die Verformung nicht entlang einer einzigen Knicklinie, sondern in einem breiten Federschenkelabschnitt stattfindet. Es ist daher gewährleistet, daß das Dämpfungselement ohne Materialermüdung eine hohe Anzahl von verhältnismäßig energiereichen Aufprallen ohne Elastizitätseinbuße auffangen kann. Die in einem breiten Abschnitt stattfindende Stoßaufnahmeverformung der Rippen gewährleistet auch, daß relativ steife, weniger elastisch reagierende und daher sprödere Materialien zur Herstellung des Dämpfungselementes verwendet werden können, um das Dämpfungselement zum Auffangen von energiereicheren Stößen verwenden zu können.

Da eine Rippe zwei vorzugsweise spiegelsymmetrisch ausgebildete Federschenkel aufweist, deren Abstand im befestigungsabschnittnahen Bereich der Stoßaufnahmeabschnitte größer als im stoßübertragungsabschnittnahen Bereich der Stoßaufnahmeabschnitte ist, ist die Rippe auch zum Auffangen von schräg auf diese wirkenden Belastungen ohne Knickbildung geeignet. Die zur Befestigungsoberfläche hin divergierenden Federschenkel wirken dann abstützähnlich.

In einem bevorzugten Ausführungsbeispiel ist zwischen den beiden sich gegenüberliegenden Federschenkeln einer Rippe im Bereich des Stoßübertragungsabschnittes ein Abstand gelassen, wobei ein die Federschenkel verbindender Steg vorgesehen ist, der ausreichend breit ausgestaltet ist, um an einer Oberfläche anzuliegen.

Die Federschenkel einer Rippe weisen im Regelfall eine gleichbleibende Materialstärke auf. Zur Erhöhung der Biegesteifigkeit der Federschenkel können die Federschenkel im Bereich der Stoßaufnahmeabschnitte jedoch auch stärker ausgebildet sein als im benachbarten Befestigungsabschnitt bzw. im Stoßübertragungsabschnitt.

In einem weiteren Ausführungsbeispiel weist das Dämpfungselement eine Längsrippe und eine Vielzahl von im wesentlichen rechtwinklig zu dieser angeordneten Querrippen auf. In dieser Ausgestaltung reagiert das Dämpfungselement deutlich steifer, was zur Folge hat, daß wesentlich energiereichere Stöße ohne Materialermüdung auffangbar sind. Die Stege der Längs- bzw. Querrippen sind in einer Ebene liegend angeordnet, so daß ein wabenähnliches Muster gebildet ist. Die aneinandergrenzenden Federschenkel der Längs- und Querrippen sind zur freien Verformbarkeit der jeweiligen Stoßaufnahmeabschnitte der Federschenkel im wesentlichen im Bereich der aneinandergrenzenden Stoßaufnahmeabschnitte geschlitzt ausgebildet.

Das Dämpfungselement kann sowohl mit seinen Befestigungsabschnitten an der Innenseite der Stoßfängeraußenhaut anliegend als auch mit den Befestigungsabschnitten auf der Oberfläche eines zur Karosserie gehörenden Trägers anliegend angeordnet sein. Weiterhin ist das Dämpfungselement einstückig mit der Stoßfängeraußenhaut fertigbar, so daß das integrierte Dämpfungselement zusätzlich als Halterung für eine Stoßfängeraußenhaut dienen kann.

Zum Abfedern besonders energiereicher Stöße können in dem zwischen zwei Federschenkeln befindlichen Zwischenraum Schaumeinleger, vorzugsweise aus Partikelschaum, eingesetzt werden.

Weitere Ausgestaltungen und Vorteile der Erfindung sind Bestandteil der Unteransprüche sowie der nachfolgenden Beschreibung unter Bezug auf die beigefügte Zeichnung. Es zeigen:
- Fig. 1: eine perspektivische Ansicht eines Abschnittes eines eine Rippe aufweisenden Dämpfungselementes,
- Fig. 2: eine perspektivische Ansicht eines als Halterung ausgebildeten Dämpfungselementes,
- Fig. 3: eine perspektivische Ansicht eines Abschnittes eines eine Längsrippe und eine Vielzahl von Querrippen aufweisenden Dämpfungselementes,
- Fig. 4: einen Schnitt entlang der Ebene IV der Fig. 3 mit der sich einstellenden Verformung der Federschenkel bei einer auf die Federschenkel wirkenden Kraft,
- Fig. 5: einen Schnitt gemäß der Fig. 4 eines weiteren Ausführungsbeispiels mit stärker ausgebildeten Stoßaufnahmeabschnitten,
- Fig. 6: das Dämpfungselement der Fig. 3, in das zur Erhöhung der Steifigkeit Partikelschaumeinleger eingesetzt sind,
- Fig. 7: eine zum Teil geschnittene Ansicht eines auf einem Träger befestigten Dämpfungselementes mit einer vor diesem angeordneten Stoßfängeraußenhaut,
- Fig. 8: einen Schnitt durch das an der Innenseite einer Stoßfängeraußenhaut befestigte, als Halterung ausgebildete Dämpfungselement,
- Fig. 9: einen Schnitt durch ein weiteres Ausführungsbeispiel eines Dämpfungselements, das in eine Stoßfängeraußenhaut integriert ist.

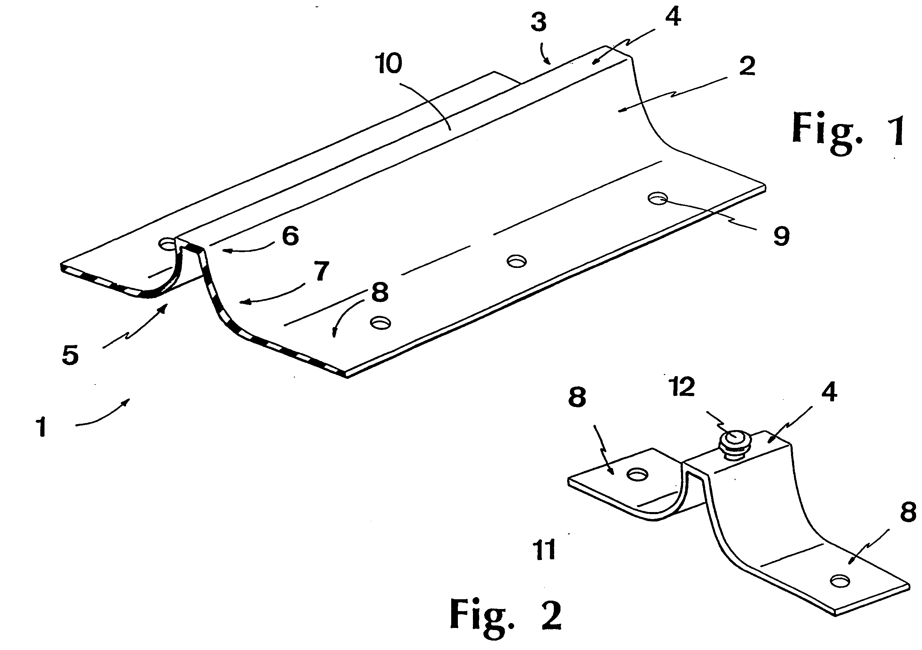

Fig. 1 zeigt in einer perspektivischen Ansicht ein Dämpfungselement 1. Das Dämpfungselement 1 weist zwei Federschenkel 2, 3 auf, die durch einen Steg 4 eine Rippe 5 bildend miteinander verbunden sind. Die Federschenkel 2, 3 grenzen in etwa rechtwinklig, ein sich öffnendes U bildend an den Steg 4. Der Steg 4 ist als flache Leiste ausgebildet.

Die an den Steg 4 grenzenden Federschenkel 2, 3 bestehen aus drei, ihrer Funktion nach unterscheidbarer Abschnitte, nämlich einem an den Steg 4 grenzenden Stoßübertragungsabschnitt 6, einen Stoßaufnahmeabschnitt 7 und einen Befestigungsabschnitt 8. Der Stoßübertragungsabschnitt 6 und der Befestigungsabschnitt 8 sind in etwa rechtwinklig zueinander angeordnet und durch den gekrümmt ausgebildeten Stoßaufnahmeabschnitt 7 miteinander verbunden. Der Befestigungsabschnitt 8 weist in regelmäßigen Abständen Befestigungslöcher 9 auf, durch die das Dämpfungselement 1 mit Hilfe von Befestigungsmitteln, etwa Nieten oder Schrauben, an einem an der Karosserie befindlichen Träger oder an einer Stoßfängeraußenhaut befestigbar ist. In Abhängigkeit von der gewünschten Verwendung des Dämpfungselementes 1 kann bei einer Befestigung des Dämpfungselements 1 an einem Träger eine Stoßfängeraußenhaut an der Vorderseite 10 des Steges 4 anliegen bzw. daran befestigt sein oder es kann zwischen der Innenseite der Stoßfängeraußenhaut und der Vorderseite 10 des Steges 4 ein Abstand belassen sein.

Ist das Dämpfungselement 1 mit seinem Befestigungsabschnitten 8 auf einer Befestigungsoberfläche befestigt und wird auf die Vorderseite 10 des Steges 4 eine Kompressionskraft ausgeübt, wird diese über die Stoßübertragungsabschnitte 6 an die Stoßaufnahmeabschnitte 7 übertragen, so daß sich diese mit zunehmend größeren Anteilen an der Oberfläche des Befestigungsgrundes anlegen. Bei einem Nachlassen der Kompressionskraft wird durch die Elastizität des für das Dämpfungselement 1 vorgesehenen Materiales dieses selbstätig die ursprüngliche Form wieder einnehmen.

Fig. 2 zeigt in einer perspektivischen Ansicht ein als Halteelement ausgebildetes Dämpfungselement 11 mit nur einer relativ kurzen Längserstreckung. Das Dämpfungselement 11 weist sämtliche zu Fig. 1 beschriebenen Merkmale auf. Darüber hinaus ist von dem Steg 4 wegweisend an diesem ein Tannenbaumzapfen 12 angeordnet, so daß das Dämpfungselement 11 zur Befestigung in eine entsprechende Bohrung einer Befestigungsoberfläche etwa einem Träger, einsetzbar ist. Mit seinen Befestigungsabschnitten 8 an einem Gegenstand, beispielsweise einer Stoßfängeraußenhaut, befestigt dient das Dämpfungselement 11 als dessen Halterung.

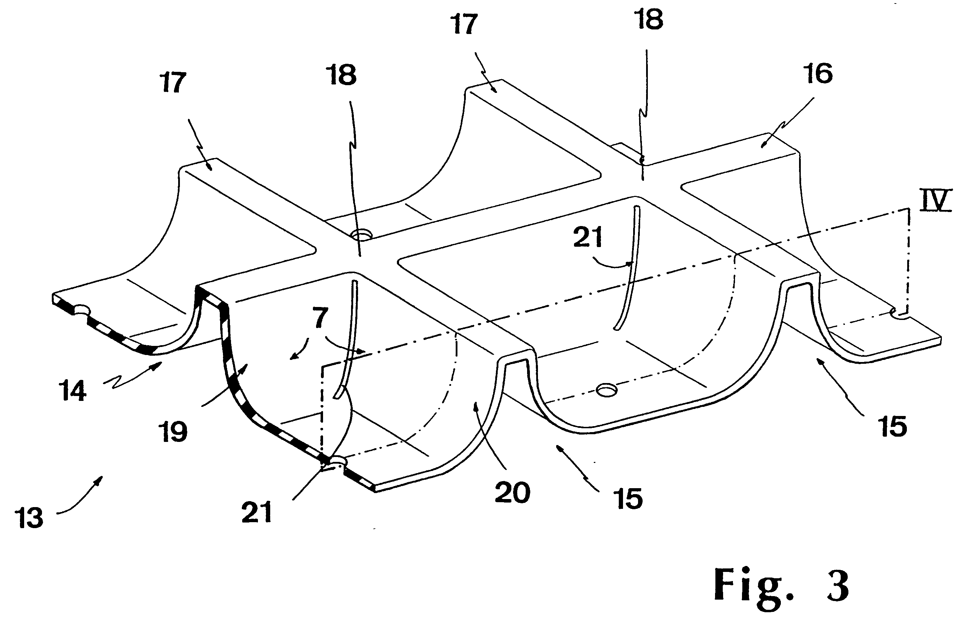

Fig. 3 zeigt in einer perspektivischen Ansicht einen Abschnitt eines Dämpfungselementes 13 gemäß einem weiteren Ausführungsbeispiel. Das Dämpfungselement 13 weist eine Längsrippe 14 und eine Vielzahl von Querrippen 15 auf. Die Querrippen 15 sind rechtwinklig zur Längsrippe 14 angeordnet. Die Rippen 14, 15 grenzen unmittelbar aneinander, so daß durch die sich kreuzenden Stege 16, 17 der Längsrippe 14 bzw. der Querrippen 15 Kreuzungsbereiche 18 gebildet sind. Die aneinandergrenzenden Federschenkel 19, 20 der Längsrippe 14 bzw. der Querrippen 15 weisen im Kontaktbereich jeweils einen Schlitz 21 auf. Die Längserstreckung der Schlitze 21 entspricht im wesentlichen der Länge der aneinandergrenzenden Stoßaufnahmeabschnitte 7 der Federschenkel 19 und 20. Das Vorsehen der Schlitze 21 gewährleistet, daß das Dämpfungselement unter Ausnutzung eines möglichst großen Deformationsweges gleichmäßig verformbar ist.

In einer weiteren Ausgestaltung ist ein Dämpfungselement vorgesehen, bei dem die Kontaktbereiche der Stoßaufnahmeabschnitte der Längs- und Querrippen nicht geschlitzt sind, so daß das Dämpfungselement steifer reagiert.

In einer nicht dargestellten Ausgestaltung ist ein Dämpfungselement vorgesehen, daß mehrere der Längsrippe 14 entsprechende Längsrippen aufweist, so daß auch breitere Bereiche mit einem Dämpfungselement schützbar sind.

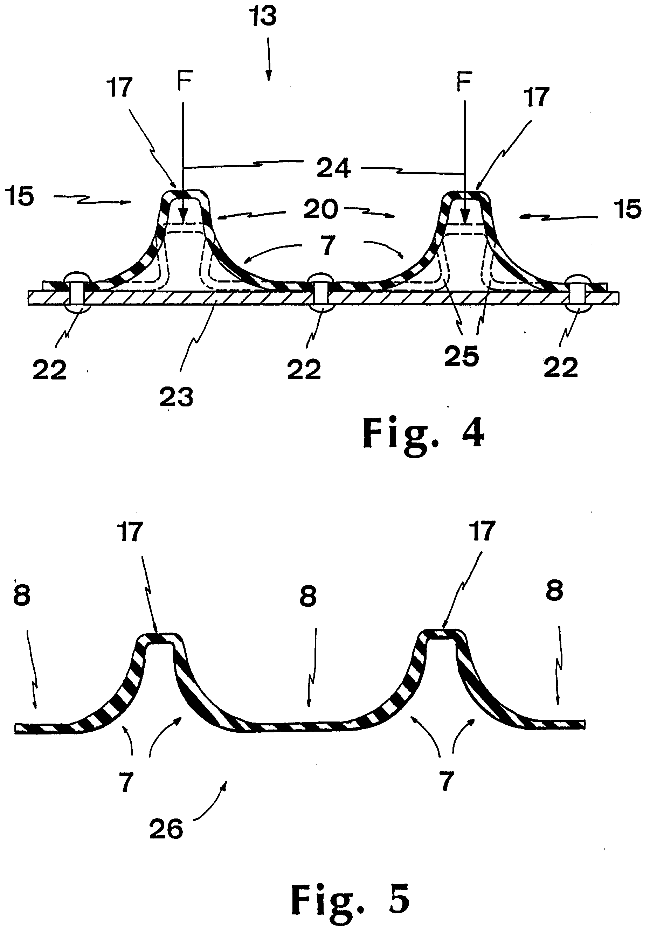

Fig. 4 zeigt einen Querschnitt durch das Dämpfungselement 13 entlang der Ebene IV der Fig. 3, wobei das Dämpfungselement 13 durch Nieten 22 an einem Stahlblechträger 23 befestigt ist. Das Dämpfungselement 13 ist mit einer gleichmäßigen Materialstärke gefertigt. Die Breite eines Steges 17 entspricht etwa einem Fünftel des Federschenkelabstandes im Bereich der Oberfläche des Trägers 23. Der Abstand der Federschenkel im Bereich des Trägers 23 beträgt etwa das 2,5-fache des Abstandes eines Steges 17 von der Oberfläche des Trägers 23.

Sind die Rippen 15 einer im wesentlichen rechtwinklig auf die Stegebene wirkenden Druckbelastung F, beispielsweise einen Aufprall mit geringer Geschwindigkeit, wie durch die Pfeile 24 dargestellt, ausgesetzt, wird die Aufprallenergie in die Verformungsarbeit der Stoßaufnahmeabschnitte 7 übertragen. Im Verlauf des Verformungsprozesses nimmt das Dämpfungselement 13 die in Fig. 4 gestrichelt dargestellte Form ein. Durch die Aufprallkraft werden die Stoßaufnahmeabschnitte 7 so verformt, daß deren Krümmungsradius sukzessive verringert wird, wobei zunehmend größere Anteile der Stoßaufnahmeabschnitte 7 an der Oberfläche des Stahlblechträgers 23 angelegt werden. Dieser Vorgang vollzieht sich abrollähnlich, so daß gewährleistet ist, daß die elastische Deformation nicht entlang einer einzigen Knicklinie stattfindet. Erst wenn ein Abrollen der Stoßaufnahmeabschnitte 7 nicht mehr möglich ist, sei es durch die Steifigkeit des verwendeten Materiales oder durch das Aneinanderstoßen der sich ausbildenden trägernahen Biegepunkte 25, ist eine Verformung der Rippen 17 auf eine Knicklinie beschränkt. Eine Verformungsarbeit entlang einer solchen Knicklinie tritt erst bei Belastungen ein, die einem Aufprall von mehr als 8 km/h entsprechen.

Da die beiden Federschenkel 20 durch den Steg 17 miteinander verbunden sind und da die Abrollbewegung, d.h. die Krümmungsradiusverkleinerung der Stoßaufnahmeabschnitte 7, wie in Fig. 4 gestrichelt dargestellt gegeneinandergerichtet verläuft, wodurch die urspünglich divergierend von dem Steg 17 wegweisende Anordnung der Federschenkel 20 in eine konvergierende Anordnung gebracht wird, wird deutlich, daß die für eine Verformung benötigte Energie mit zunehmender Verformung der Rippen 15 ansteigt.

Aus der oben dargelegten Verformung der Rippen 15 des Dämpfungselementes 13 wird deutlich, daß die Dämpfungseigenschaft einer Rippe 15 maßgeblich durch die Elastizität bzw. die Biegesteifigkeit im Bereich der Stoßaufnahmeabschnitte 7 bestimmt ist. Sind, wie in Fig. 5 gezeigt, bei einem Dämpfungselement 26 die Stoßaufnahmeabschnitte 7 stärker als die angrenzenden Stege 17 bzw. die angrenzenden Befestigungsabschnitte 8 ausgebildet, ist die zur Verformung der Stoßaufnahmeabschnitte 7 benötigte Energie erhöht. Das Dämpfungselement 26 reagiert somit steifer als beispielsweise das mit gleichmäßiger Materialstärke gefertigte Dämpfungselement 13.

Da sich bei der Verformung der Stoßaufnahmeabschnitte 7 keine Knicklinien ausbilden, nehmen die Dämpfungselemente 1, 11, 13, 26 bei einem Nachlassen der Druckbeanspruchung aufgrund der Materialelastizitäten ihre ursprüngliche Form wieder ein. Eine Bildung von Weißbrüchen ist verhindert.

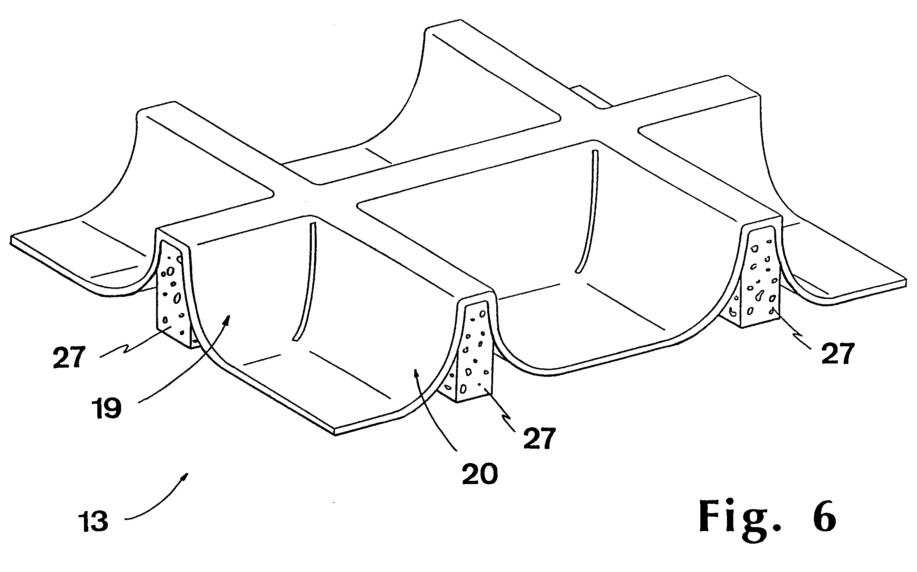

Fig. 6 zeigt in einer perspektivischen Ansicht das Dämpfungselement 13 der Fig. 3 in einer perspektivischen Ansicht, bei dem zur Erhöhung der Dämpfungssteifigkeit in den zwischen den Federschenkelpaaren 19, 20 belassenen Zwischenräumen Schaumeinleger 27 aus Polypropylen-Partikelschaum eingesetzt sind.

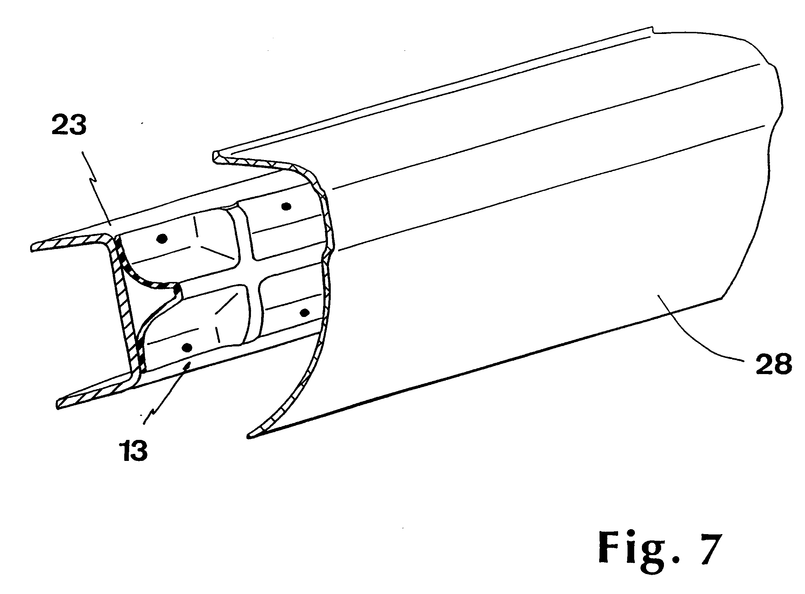

Fig. 7 zeigt in einer zum Teil geschnitten perspektivischen Ansicht das auf dem Stahlblechträger 23 befestigte Dämpfungselement 13. Der Träger 23 ist Bestandteil einer nicht dargestellten Fahrzeugkarosserie. Vor dem Träger 23 und vor dem Dämpfungselement 13 ist eine strukturierte Stoßfängeraußenhaut 28 angeordnet, so daß das Dämpfungselement 13 als Stoßfängereinlegeteil verwendet ist.

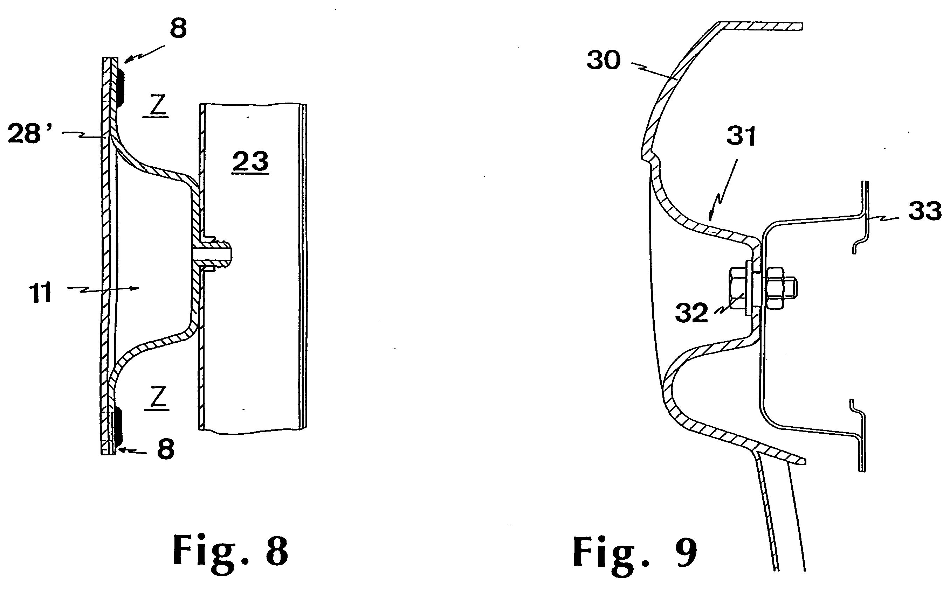

In Fig. 8 ist ein Schnitt durch das mit seinen Befestigungsabschnitten 8 an der Innenseite einer weiteren Stoßfängeraußenhaut 28' angeschweißtes Befestigungselement 11 in einem Schnitt dargestellt. Das Dämpfungselement 11 dient als Halteelement für die Stoßfängeraußenhaut 28' bei einer Befestigung an dem Stahlblechträger 23. Der zwischen dem Stahlblechträger 23 und der Stoßfängeraußenhaut 28' neben dem Dämpfungselement 11 belassene Zwischenraum Z kann beispielsweise mit Schaumeinlegern ausgefüllt sein. Auch bei einer Vielzahl kleinerer auf die Stoßfängeraußenhaut 28' wirkender Aufpralle zeigt die Halterung 11 weder eine Rißbildung noch eine Materialermüdung.

Fig. 9 zeigt in einem Querschnitt ein einstückig mit einer Stoßfängeraußenhaut 30 gefertigtes Dämpfungselement 31. Das Dämpfungselement 31 erstreckt sich im wesentlichen entlang der gesamten Längserstreckung der Stoßfängeraußenhaut 30 und ist vorderseitig durch eine Blende verschließbar. Das Dämpfungselement 31 und somit die Stoßfängeraußenhaut 30 ist über mehrere Bolzen 32 an einem Träger 33 befestigt. Das Dämpfungselement 31 verbindet somit die Eigenschaften eines Dämpfungselements mit den Eigenschaften einer Halterung.

In einer Weiterbildung sind zwei Dämpfungselemente 11, 13 oder 26 mit ihren Stegen 4, 16 bzw. 17 aufeinanderliegend angeordnet, um den Dämpfungsweg zu verdoppeln. Mit den Befestigungsabschnitten 8 ist eine Stoßfängeraußenhaut an einem Träger befestigbar.

## Patentansprüche

1. Dämpfungselement insbesondere zur Verwendung als Einlegeteil zwischen einer Stoßfängeraußenhaut (28, 28', 30) eines Stoßfängers und einem an einem Fahrzeug befindlichen Träger (23, 33) mit mindestens einer stoßaufnehmenden Rippe (5, 14, 15), die zwei Federschenkel (2, 3; 19, 20) aufweist, wobei jeder Federschenkel einen Stoßübertragungsabschnitt, einen Befestigungsabschnitt und einen gekrümmten, den Stoßübertragungsabschnitt und den Befestigungsabschnitt verbindenden Stoßaufnahmeabschnitt aufweist, wobei die beiden Federschenkel im Bereich ihrer Stoßübertragungsabschnitte miteinander verbunden sind und der Abstand der beiden nicht deformierten, sich gegenüberliegenden Federschenkel im stoßübertragungsabschnittnahen Bereich der Stoßaufnahmeabschnitte kleiner als im befestigungsabschnittnahen Bereich der Stoßaufnahmeabschnitte ist, **dadurch gekennzeichnet**, daß die Federschenkel (2, 3; 19; 20) im Bereich der Befestigungsabschnitte (8) flächig an einem Befestigungsgrund (23, 28') anliegen und die gekrümmten Stoßaufnahmeabschnitte (7) von dem Befestigungsgrund (23, 28') wegweisen, so daß sich bei einer auf die Federschenkel (2, 3; 19; 20) wirkenden Druckbelastung zunehmend Bereiche der gekrümmten Stoßaufnahmeabschnitte (7) unter Verringerung der Krümmungsradien abrollähnlich an den Befestigungsgrund (23, 28') anlegen.

2. Dämpfungselement nach Anspruch 1, dadurch gekennzeichnet, daß die Stoßübertragungsabschnitte (6) der Federschenkel (2, 3; 19; 20) durch einen Steg (4) miteinander verbunden sind, wobei die Stoßübertragungsabschnitte (6) etwa rechtwinklig an den Steg (4) grenzen und zwischen den beiden Federschenkeln (2, 3; 19; 20) im Bereich der Stoßübertragungsabschnitte (6) ein Abstand belassen ist.

3. Dämpfungselement nach Anspruch 1 oder 2, dadurch gekennzeichnet, daß ein Dämpfungselement (13, 26) mindestens eine Längsrippe (14) und eine Vielzahl von Querrippen (15) aufweist.

4. Dämpfungselement nach Anspruch 3, dadurch gekennzeichnet, daß die Federschenkel (19) der Längsrippen (14) und die Federschenkel (20) der Querrippen (15) im Bereich der jeweils aneinandergrenzenden Stoßaufnahmeabschnitte (7) einen Schlitz (21) aufweisen.

5. Dämpfungselement nach Anspruch 1 oder 3, dadurch gekennzeichnet, daß die Federschenkel (2, 3; 19; 20) eine gleichmäßige Materialstärke aufweisen.

6. Dämpfungselement nach Anspruch 1 oder 3, dadurch gekennzeichnet, daß die Federschenkel (2, 3; 19; 20) im Bereich der Stoßaufnahmeabschnitte (7) stärker als in den angrenzenden Stoßübertragungsabschnitten (6) und in den Befestigungsabschnitten (8) ausgebildet sind.

7. Dämpfungselement nach Anspruch 2, dadurch gekennzeichnet, daß das Dämpfungselement (11, 31) mit einer Stoßfängeraußenhaut (30) integriert gefertigt ist, wobei der Steg (4) zu einem entsprechenden, an der Karosserie eines Fahrzeuges befindlichen Träger (23, 33) weisend angeordnet ist.

8. Dämpfungselement nach Anspruch 2 oder 3, dadurch gekennzeichnet, daß zwischen den durch die rippenbildenden Federschenkel (2, 3; 19; 20) belassenen Zwischenräume Schaumeinleger (27) angeordnet sind.

9. Dämpfungselement nach Anspruch 1, dadurch gekennzeichnet, daß ein Dämpfungselement (11, 31) als Halterung zum Verbinden einer Stoßfängeraußenhaut (28', 30) mit einem Träger (23, 33) vorgesehen ist.

10. Dämpfungselement nach einem der vorstehenden Ansprüche, dadurch gekennzeichnet, daß zwei Dämpfungselemente (1, 13, 26) mit ihren Stegen (4, 16, 17) aufeinanderliegend angeordnet sind.

## Claims

1. A damping element, in particular for use as an insert member between a bumper outer skin (28, 28', 30) of a bumper and a bearer (23, 33) disposed on a vehicle, comprising at least one impact-receiving rib (5, 14, 15) which has two spring limbs (2, 3; 19, 20), wherein each spring limb has an impact-transmission portion, a fixing portion and a curved impact-receiving portion which connects the impact-transmission portion and the fixing portion, wherein the two spring limbs are connected together in the region of their impact-transmission portions and the spacing of the two non-deformed, oppositely disposed spring limbs in the region of the impact-receiving portions, which is near the impact-transmission portions, is smaller than in the region of the impact-receiving portions, which is near the fixing portions, characterised in that in the region of the fixing portions (8) the spring limbs (2, 3; 19; 20) bear flat against a fixing base (23, 28') and the curved impact-receiving portions (7) face away from the fixing base (23, 28') so that in the case of a pressure loading acting on the spring limbs (2, 3; 19; 20) regions of the curved impact-receiving portions (7) increasingly bear against the fixing base (23, 28') in a rolling-like manner, with a reduction in the radii of curvature.

2. A damping element according to claim 1 characterised in that the impact-transmission portions (6) of the spring limbs (2, 3; 19; 20) are connected together by a web (4), wherein the impact-transmission portions (6) adjoin the web (4) approximately at a right angle and a spacing is left between the two spring limbs (2, 3; 19; 20) in the region of the impact-transmission portions (6).

3. A damping element according to claim 1 or claim 2 characterised in that a damping element (13, 26) has at least one longitudinal rib (14) and a plurality of transverse ribs (15).

4. A damping element according to claim 3 characterised in that the spring limbs (19) of the longitudinal ribs (14) and the spring limbs (20) of the transverse ribs (15) have a slot (21) in the region of the respectively adjoining impact-receiving portions (7).

5. A damping element according to claim 1 or claim 3 characterised in that the spring limbs (2, 3; 19; 20) are of a uniform material thickness.

6. A damping element according to claim 1 or claim 3 characterised in that the spring limbs (2, 3; 19; 20) are thicker in the region of the impact-receiving portions (7) than in the adjoining impact-transmission portions (6) and in the fixing portions (8).

7. A damping element according to claim 2 characterised in that the damping element (11, 31) is produced integrated with a bumper outer skin (30), wherein the web (4) is arranged facing towards a corresponding bearer (23, 33) on the body of a vehicle.

8. A damping element according to claim 2 or claim 3 characterised in that foam inserts (27) are arranged between the intermediate spaces which are left by the rib-forming spring limbs (2, 3; 19; 20).

9. A damping element according to claim 1 characterised in that a damping element (11, 31) is provided as a holding means for connecting a bumper outer skin (28', 30) to a bearer (23, 33).

10. A damping element according to one of the preceding claims characterised in that two damping elements (1, 13, 26) are arranged with their webs ( 4, 16, 17) bearing against each other.

## Revendications

1. Elément d'amortissement prévu plus particulièrement pour être utilisé en tant que pièce intermédiaire entre la paroi externe d'un pare-chocs (28,28',30) et un support (23,33) se trouvant sur un véhicule, cet élément d'amortissement comprenant au moins une nervure (5,14,15) recevant les chocs comprenant deux flasques élastiques (2,3;19;20) chacun présentant une zone de transfert de chocs, une zone de fixation ainsi qu'une zone d'absorption arquée reliant la zone de transfert et la zone de fixation ; ces deux flasques élastiques étant reliés ensemble au niveau de leur zone de transfert ; l'intervalle indéformable entre les flasques élastiques en vis-à-vis étant plus petit au niveau de la zone d'absorption de chocs proche de la zone de transfert qu'au niveau de la zone d'absorption de chocs proche de la zone de fixation, **caractérisé en ce que** les flasques élastiques (2,3;19;20) sont amenés à plat par leur zone de fixation (8) contre une surface de fixation (23,28'), du fait que les zones d'absorption arquées (7) démarrent des surfaces de fixation (23,28') de telle sorte qu'une partie correspondante de ces zones d'absorption arquées (7) sur lesquelles est exercée une charge de pression agissant sur le flasque élastique (2,3;19;20) vienne se coucher sur la surface de fixation (23,28') dans un mouvement semblable à un roulement par diminution de son angle de courbure.

2. Elément d'amortissement selon la revendication 1, caractérisé en ce que les zones de transfert de chocs (6) des flasques élastiques (2,3;19;20) sont reliées ensemble par un méplat (4) bordé sensiblement à angle droit par ces zones de transfert de chocs, et en ce que l'on maintient un écartement entre les deux flasques élastiques (2,3;19;20) au niveau de ces zones de transfert de chocs (6).

3. Elément d'amortissement selon la revendication 1 ou 2, caractérisé en ce que l'élément d'amortissement (13,26) présente au moins une nervure longitudinale (14) et une pluralité de nervures transversales (15).

4. Elément d'amortissement selon la revendication 3, caractérisé en ce que les flasques élastiques (19,20) des nervures longitudinales (14) et transversales (15) présentent une fente (21) au niveau des zones d'absorption de chocs (7) se bordant mutuellement.

5. Elément d'amortissement selon la revendication 1 ou 3, caractérisé en ce que les flasques élastiques (2,3;19;20) présentent une rigidité de matériau constante.

6. Elément d'amortissement selon la revendication 1 ou 3, caractérisé en ce que les flasques élastiques (2,3;19;20) présentent des zones d'absorption (7) plus fortes que les zones de transfert (6) et de fixation (8) adjacentes.

7. Elément d'amortissement selon la revendication 2, caractérisé en ce que l'élément d'amortissement (11,31) est réalisé de manière intégrée avec la paroi externe de pare-chocs (30), le méplat (4) étant rapporté contre un support (23,33) correspondant se situant dans la carrosserie d'un véhicule.

8. Elément d'amortissement selon la revendication 2 ou 3, caractérisé en ce qu'un remplissage de mousse (27) est agencé dans les espaces intermédiaires formés entre deux flasques élastiques (2,3 ;19;20) formant une nervure (27).

9. Elément d'amortissement selon la revendication 1, caractérisé en ce qu'un élément d'amortissement (11,31) est prévu en tant que support pour relier une paroi externe de pare-chocs (28',30) à un support (23,33).

10. Elément d'amortissement selon l'une des revendications précédentes, caractérisé en ce que deux éléments d'amortissement (1,13,26) sont agencés avec leurs méplats (4,16,17) superposés.
